# DEMANDE DE BREVET EUROPEEN

(11) **EP 1 282 037 A1**
(43) Date de publication de la demande: **05.02.2003**
(21) Numéro de dépôt: 01402104.2
(22) Date de dépôt: 03.08.2001
(51) Int. Cl.: G06F 9/445, G01M 15/00

(54) **Programme informatique de pilotage d'interface en temps réel**

(71) Demandeur: Drecq Daniel Technologies D 2 T, 78610 Saint Leger En Yveline (FR)
(72) Inventeur: Dourille, Xavier, 78990 Elancourt (FR); Drecq, Daniel, 78610 Saint Leger en Yvelines (FR); Jouenne, Philippe, 01360 Beligneux (FR); Nouallet, Philippe, 78310 Plaisir (FR)
(74) Mandataire: Abello, Michel

(57) **Abrégé**

Programme pilote informatique pour périphérique d'ordinateur, apte à être exécuté par un ordinateur muni d'un système d'exploitation pour piloter au moins un périphérique, ledit système d'exploitation comportant une couche noyau qui contient des fonctions d'ordonnancement et une couche applicative, ledit programme pilote comportant au moins une fonction temps réel (125b, 126b) apte à être appelée par un module de temps réel (33) d'un programme principal (24) et à s'exécuter en temps réel, immédiatement lors dudit appel (73), caractérisé par le fait que ladite fonction temps réel n'invoque ni les primitives spécifiques de la couche noyau, ni les primitives spécifiques de la couche applicative, pour être apte à être copiée de manière adressable dans un bloc de mémoire (70) commun avec ledit module de temps réel (33), avant d'être appelée par ce dernier.

## Description

La présente invention concerne un programme informatique de contrôle et de commande pour un banc d'essai, particulièrement pour un banc d'essai comportant un moteur thermique, ainsi qu'un programme pilote informatique pour piloter un périphérique d'ordinateur relié à un banc d'essai.

On connaît des bancs d'essai destinés à essayer les moteurs thermiques et à mesurer au cours de leur fonctionnement différents paramètres physiques. Un tel banc d'essai, incluant un moteur à essayer, est équipé de nombreux capteurs disposés en différents points du banc d'essai pour recueillir des données sur l'état du système, par exemple, des températures, des pressions, des couples, des ouvertures ou fermetures de vannes, etc. Un tel banc d'essai comporte aussi des actionneurs pour commander différents organes du banc d'essai, tels qu'un accélérateur, un dispositif d'injection commandée, une machine de charge telle qu'un dynamomètre, etc. , afin de modifier selon une procédure d'essai particulière des paramètres de fonctionnement du système, tels qu'un débit de combustible, un couple de freinage, etc.

Pour gérer l'ensemble des capteurs et actionneurs du banc de manière à exécuter une procédure d'essai spécifiée par un opérateur, il est connu d'utiliser un programme de contrôle et de commande exécuté par un système informatique.

Par ailleurs, on connaît des systèmes informatiques munis de systèmes d'exploitation multitâches, tel que par exemple un système d'exploitation de type Windows® produits par Microsoft®. Ces systèmes d'exploitation offrent une grande ergonomie d'utilisation car ils permettent d'exécuter simultanément différents programmes d'application, sont très répandus et sont adaptés à une large gamme d'applications.

Un système d'exploitation multitâche comporte une hiérarchie de plusieurs couches fonctionnelles, chaque couche comportant des fonctions élémentaires ou primitives, pour effectuer les tâches dédiées au système d'exploitation. Généralement, les primitives d'une couche servent de support aux primitives appartenant aux couches qui lui sont supérieures. Notamment, on distingue une couche noyau du système d'exploitation, qui est une première couche comportant les primitives les plus élémentaires, puis une seconde couche logicielle, dite couche applicative. La couche applicative est celle qui gère les programmes d'application en offrant l'ergonomie propre au système multitâche. La couche applicative fait appel aux primitives définies dans la couche noyau, tandis que la couche noyau ne fait bien sûr pas appel aux primitives définies spécifiquement dans la couche applicative.

La couche noyau d'un système d'exploitation multitâche comporte notamment un gestionnaire des tâches, c'est-à-dire des processus d'ordonnancement pour gérer, hors du contrôle de l'utilisateur, l'attribution du temps-machine (temps CPU) du processeur aux différents processus de la couche applicative en cours d'exécution, en fonction de niveaux de priorités qui sont attribués aux différents processus. Ainsi, l'exécution des différentes étapes d'un processus de la couche applicative par ces systèmes prend effet en temps différé, après des délais dépendant notamment de la charge de travail du processeur et du niveau de priorité du processus.

De ce fait, si les acquisitions de mesures depuis le banc d'essai et/ou émissions de commandes vers le banc d'essai sont commandées par des processus de la couche applicative, on ne peut pas déterminer de façon certaine la relation temporelle entre les diffé rentes mesures acquises, les différentes phases de fonctionnement du moteur et les différentes modifications des paramètres de fonctionnement du moteur. Les instants d'acquisition des mesures et d'activation des actionneurs n'étant ni déterminés, ni réguliers, les résultats de l'essai ne sont ni pertinents, ni exploitables.

Un système informatique de contrôle et de commande pour un banc d'essai doit pouvoir commander en temps réel, c'est-à-dire à des instants précisément déterminés et indépendamment de la c harge de travail du système informatique, l'acquisition des signaux de mesure produits par les capteurs et l'émission de commandes à exécuter par les actionneurs. Pour cela, le système informatique doit être muni de moyens logiciels et matériels pour exécuter des processus informatiques en temps réel. Pour cela, plusieurs solutions sont connues :
- on sait munir le système informatique d'un processeur supplémentaire destiné à exécuter uniquement les processus en temps réel, ce processeur étant muni d'un deuxième système d'exploitation adapté au temps réel, c'est-à-dire n'introduisant pas de délais d'exécution. Cette solution présente l'inconvénient de requérir une architecture matérielle complexe et coûteuse. Une carte -mère étant généralement la composante la plus onéreuse d'un ordinateur, cette solution double sensiblement le coût du système informatique requis.
- on sait aussi munir un ordinateur comportant un unique processeur d'un deuxième système d'exploitation adapté au temps réel. Dans ce cas, le même processeur exécute les processus en temps différé sous la conduite du premier système d'exploitation multitâche et les processus en temps réel sous la conduite du deuxième système d'exploitation. Dans ce cas, les communications entre les deux systèmes d'exploitation sont très difficiles à mettre au point et sont une source d'erreurs.
- on sait enfin adjoindre une extension de temps réel au système d'exploitation multitâche initial. Cependant, une telle opération modifie profondément le système d'exploitation initial et génère des incompatibilités entre le système d'exploitation modifié et les programmes d'application supportés par le système d'exploitation initial.

Enfin, les trois solutions connues nécessitent l'emploi d'une architecture logicielle lourde et compliquée, ce qui augmente les coûts, les risques d'erreurs et le temps de développement et de débogage des programmes.

L'invention a pour premier but de fournir un programme informatique de contrôle et de commande pour un banc d'essai qui soit apte à fonctionner en temps réel sur un système informatique muni d'un système d'exploitation multitâche et en s'affranchissant des inconvénients précités.

Pour cela, l'invention fournit un programme informatique de contrôle et de commande pour banc d'essai, ledit programme informatique comportant des codes d'instructions aptes à être lus ou stockés sur un support d'enregistrement et aptes à être exécutés, par un ordinateur muni d'un système d'exploitation, pour contrôler et commander en temps réel un banc d'essai en fonction d'une procédure d'essai, ladite procédure d'essai comportant une suite chronologique d'instructions de commande à exécuter avec des instants d'exécution prévus, ladite procédure d'essai étant destinée à être définie par un opérateur et à être mémorisée dans des moyens de mémorisation dudit ordinateur, ledit système d'exploitation comportant plusieurs couches fonctionnelles qui contiennent des primitives aptes à effectuer des tâches propres audit système d'exploitation, lesdites couches fonctionnelles comprenant une couche noyau qui contient des fonctions d'ordonnancement et une couche applicative dont les primitives dépendent des primitives de la couche noyau, lesdites fonctions d'ordonnancement étant aptes à différer l'exécution des primitives de la couche applicative par ledit ordinateur, ledit programme informatique comprenant un module d'application qui fait appel aux primitives spécifiques de la couche applicative et un module de temps réel apte à être exécuté en temps réel, immédiatement à c haque occurrence d'une interruption prioritaire prédéfinie, générée périodiquement par un moyen de génération sur un bus dudit ordinateur à une fréquence prédéterminée FI, caractérisé par le fait que ledit module d'application et ledit module de temps réel sont aptes à être exécutés par un même processeur dudit ordinateur, ledit module de temps réel faisant appel aux primitives de la couche noyau dudit système d'exploitation, à l'exclusion des primitives de la couche applicative et des primitives de tout autre système d'exploitation.

L'utilisation d'un seul processeur et d'un unique système d'exploitation permet de simplifier l'architecture matérielle et logicielle nécessaire au contrôle et à la commande du banc d'essai, et donc de réduire son coût. Notamment, dans le mode de réalisation préféré, on utilise un système d'exploitation du type Windows® produit par Microsoft®, avec pour avantage qu'un tel système d'exploitation très répandu est bien connu de l'homme du métier, ce qui facilite l'installation du programme informatique sur l'ordinateur destiné à l'exécuter.

Selon la présente invention, on entend par immédiateté d'exécution l'absence de tout retard introduit par les fonctions d'ordonnancement du système d'exploitation, c'est-à-dire le comportement du système d'exploitation vis-à-vis d'un processus de niveau de priorité maximal. Il subsiste toujours des retards infinitésimaux incompressibles dus aux durées de propagation des signaux électriques, aux temps de réponse des composants électroniques et aux durées de traitement des données par le processeur proprement dit, ces dernières étant elles-mêmes fonction du cadencement d'horloge du processeur en l'absence de conflit d'interruption.

Avantageusement, l'exécution dudit module de temps réel comporte au moins une des étapes consistant à :
- acquérir une valeur courante d'un signal de mesure, sur au moins une voie d'entrée dudit ordinateur destinée à être reliée à au moins un capteur dudit banc d'essai ;
- générer au moins une valeur de sortie, en fonction desdites instructions de commande dont l'exécution est prévue à l'instant d'occurrence de ladite interruption prioritaire spécifique, et/ou en fonction d'une valeur courante d'un signal appliqué sur une voie d'entrée ou de sortie dudit ordinateur, et rendre égale à ladite ou auxdites valeur(s) de sortie générée(s) au moins une valeur courante de signal de commande appliqué sur au moins une voie de sortie destinée à être reliée à au moins un actionneur dudit banc d'essai ;
   l'exécution dudit module de temps réel comportant aussi les étapes consistant à :

- mémoriser dans lesdits moyens de mémorisation un enregistrement brut de l'état courant dudit banc d'essai, ledit enregistrement brut comportant ledit instant d'occurrence, les valeurs courantes des signaux de mesure sur lesdites voies d'entrées et/ou les valeurs courantes des signaux de commande sur lesdites voies de sortie ;
   les codes d'instructions dudit module d'application étant aptes à être exécutés par ledit processeur en temps différé, sous la conduite desdites fonctions d'ordonnancement, pour effectuer les étapes consistant à :

- lire lesdits enregistrements bruts selon l'ordre chronologique desdits instants d'occurrence ;
- traiter lesdits enregistrements bruts de manière à obtenir une représentation appliquée desdits états successifs du banc d'essai.

La représentation appliquée des états successifs du banc d'essai constitue un résultat de l'essai. Elle peut être exploitée par un technicien pour identifier des dysfonctionnements ou améliorer le réglage du moteur. Cette représentation appliquée peut prendre des formes multiples, comme celle de tableaux de valeurs et de chronogrammes, et avoir différents supports, écran, fichiers, papier, etc.

De préférence, l'étape de génération des valeurs de sort ie comporte des opérations mathématiques codées en virgule flottante.

Avantageusement, l'étape de traitement des enregistrements bruts par ledit module d'application comporte une étape de calcul de variables d'état du système à partir des valeurs successives des signaux de mesure.

Avantageusement, le traitement par le module d'application desdits enregistrements bruts est effectué en fonction de paramètres de configuration desdites voies d'entrée et de sortie, lesdits paramètres de configuration définissant des propriétés des signaux mis en oeuvre lors dudit essai sur lesdites voies, et de paramètres de représentation dudit essai, lesdits paramètres de représentation définissant un format de ladite représentation appliquée, lesdits paramètres de configuration et de représentation étant destinés à être définis par un opérateur et à être mémorisés dans lesdits moyens de mémorisation.

Selon une caractéristique particulière de l'invention, l'exécution dudit module de temps réel comporte, après l'étape d'acquisition des valeurs courantes de signaux de mesure, les étapes consistant à évaluer au moins une condition logique de déclenchement d'au moins une procédure de sécurité, ladite condition logique dépendant desdites valeurs courantes acquises puis, lorsque ladite condition logique est vérifiée, à substituer ladite procédure d'essai par ladite procédure de sécurité pour effectuer les étapes suivantes de commande du banc d'essai, ladite procédure de sécurité comportant des instructions de commande distinctes de celles de la procédure d'essai et également destinées à être définies par un opérateur et à être mémorisées dans lesdits moyens de mémorisation. Les conditions logiques de déclenchement de sécurité peuvent être des conditions instantanées, dont l'évaluation consiste, par exemple, à comparer une valeur courante de mesure à un seuil prédéterminé ne devant pas être dépassé, ou des conditions en moyenne temporelle, dont l'évaluation consiste, par exemple, à comparer plusieurs valeurs successives d'un même signal de mesure à un seuil prédéterminé ne devant pas être dépassé pendant plus d'une durée prédéterminée.

Avantageusement, les enregistrements bruts des états successifs dudit banc d'essai sont mémorisés dans une mémoire tampon dudit ordinateur sous la forme d'une première file d'attente de longueur variable.

De préférence, chaque enregistrement brut d'état dudit banc d'essai est accompagné d'un message d'informations et/ou d'instructions et mémorisé chronologiquement dans ladite mémoire tampon dudit ordinateur dans une deuxième file d'attente de longueur variable, l'exécution dudit module d'application comportant une étape de lecture desdits messages et une étape d'exécution desdites instructions incluses.

De préférence, l'exécution dudit module d'application comporte une étape consistant à exécuter des instructions envoyées de manière interactive au cours d'un essai par ledit opérateur, par l'intermédiaire de moyens d'interfaçage homme -machine reliés audit ordinateur, par exemple un clavier, une souris et un moniteur. Ces instructions permettent d'enregistrer dans des fichiers, d'afficher sur un écran, ou d'imprimer sur une imprimante au moins une partie de ladite représentation appliquée, et de modifier en cours d'essai ladite procédure d'essai, ladite procédure de sécurité et lesdits paramètres de représentation.

Selon une autre caractéristique de l'invention, ledit module d'application et ledit module de temps réel invoquent des variables communes mémorisées dans un bloc de mémoire partagée.

De préférence, la valeur de fréquence FI de ladite interruption prioritaire est un paramètre de fonctionnement dudit programme informatique destiné à être défini par un opérateur et à être mémorisé dans lesdits moyens de mémorisation. De préférence dans ce cas, lesdits instants d'occurrence sont mesurés par un compteur d'occurrence desdites interruptions prioritaires.

Avantageusement, la valeur de fréquence FI peut varier de 1 H_{z} à plus de 1000 Hz et vaut, de préférence, de l'ordre de 100 Hz.

De préférence, le programme de contrôle et de commande selon l'invention se compose d'un programme principal et d'au moins un programme pilote pour piloter au moins un périphérique dudit ordinateur, ledit périphérique étant destiné à être relié audit banc d'essai.

Par ailleurs, l'établissement et la gestion des communications entre la carte-mère de l'ordinateur et chaque capteur ou actionneur du banc d'essai requiert l'utilisation d'un périphérique servant d'interface entre la carte-mère et le capteur ou actionneur proprement dit, ainsi que d'un programme pilote pour piloter le périphérique en fonction des besoins de communication entre la carte - mère et le capteur ou actionneur. Pour que l'instant d'acquisition d'une mesure depuis un capteur et/ou d'exécution d'une action par un actionneur soit déterminé précisément, il faut que les échanges d'informations entre la carte-mère et le capteur ou actionneur soient pilotés en temps réel, et donc que le programme pilote fonctionne, au moins en ce qui concerne lesdits échanges, en temps réel.

Pour cela, on peut concevoir un programme pilote comportant un module de temps réel faisant appel directement aux primitives de la couche noyau. Cependant, un tel programme pilote est difficile et long à développer, à déboguer et à installer, donc finalement coûteux.

L'invention a pour second but de fournir un programme pilote qui soit apte à piloter en temps réel un périphérique destiné à être relié à un banc d'essai et ne présente pas les inconvénients précités.

Pour cela, l'invention fournit un programme pilote informatique pour périphérique d'ordinateur, ledit programme pilote comportant des codes d'instructions aptes à être lus ou stockés sur un support d'enregistrement et aptes à être exécutés, par un ordinateur muni d'un système d'exploitation et de moyens de mémorisation, pour piloter au moins un périphérique destiné à être relié à un banc d'essai, ledit système d'exploitation comportant plusieurs couches fonctionnelles qui contiennent des primitives aptes à effectuer des tâches propres audit système d'exploitation, lesdites couches fonctionnelles comprenant une couche noyau qui contient des fonctions d'ordonnancement et une couche applicative dont les primitives dépendent des primitives de la couche noyau, lesdites fonctions d'ordonnancement étant aptes à retarder l'exécution des primitives de la couche applicative par ledit ordinateur, ledit programme pilote comportant au moins une fonction temps réel apte à être appelée par un module de temps réel d'un programme principal et à s'exécuter en temps réel, immédiatement lors dudit appel, caractérisé par le fait que ladite fonction temps réel n'invoque ni les primitives spécifiques de la couche noyau, ni les primitives spécifiques de la couche applicative, pour être apte à être copiée de manière adressable dans u n bloc de mémoire dudit module de temps réel, avant d'être appelée par ce dernier.

Avantageusement, l'exécution de ladite fonction temps réel comporte au moins une des étapes consistant à :
- acquérir une valeur actuelle d'au moins un signal de mesure, sur au moins une voie d'entrée dudit périphérique ;
- rendre une valeur actuelle d'au moins un signal de commande, appliqué sur au moins une voie de sortie dudit périphérique, égale à une valeur de sortie prédéterminée ;
- exécuter une instruction atomique.

Une instruction atomique est une instruction indivisible exécutée par la fonction temps réel du programme pilote de manière à, par exemple, écrire une valeur dans une voie de sortie, envoyer une commande, ou exécuter une fonction de cycle.

Avantageusement, l'exécution de ladite fonction temps réel comporte, ensuite, l'étape consistant à mémoriser chacune desdites valeurs actuelles dans lesdits moyens de mémorisation.

De préférence, l'exécution de ladite fonction temps réel comporte l'étape consistant à lire ladite valeur prédéterminée dans lesdits moyens de mémorisation.

Avantageusement, le programme pilote selon l'invention comporte une partie d'application apte à appeler un module d'application du programme principal, ladite partie d'application et ledit module d'application invoquant des primitives de la couche applicative du système d'exploitation.

De préférence, le programme pilote selon l'invention est apte à mettre en forme les signaux de mesure et/ou de commande en fonction de paramètres de configuration de ladite ou desdites voie(s) d'entrée et/ou de sortie, lesdits paramètres de configuration étant destinés à être définis par un opérateur et mémorisés dans lesdits moyens de mémorisation.

Avantageusement, le programme pilote selon l'invention se présente sous la forme d'une bibliothèque de routines appartenant à la couche applicative.

De préférence, ladite fonction temps réel n'invoque pas de donnée déclarée statiquement dans ladite bibliothèque.

Avantageusement, ledit système d'exploitation est une version sans extension temps réel d'un système d'exploitation de type Windows® produit par Microsoft®.

L'invention sera mieux comprise, et d'autres buts, détails, caractéristiques et avantages de celle -ci apparaîtront plus clairement au cours de la description suivante d'un mode de réalisation particulier de l'invention, donné uniquement à titre illustratif et non limitatif, en référence au dessin annexé. Sur ce dessin :
- la figure 1 est une représentation schématique d'un banc d'essai contrôlé et commandé par un ordinateur exécutant un programme de contrôle et de commande selon l'invention ;
- la figure 2 est un schéma synoptique de fonctionnement du programme informatique de contrôle et de commande de la figure 1 ;
- la figure 3 est une représentation schématique d'interactions entre un programme principal et deux programmes pilote selon l'invention ;
- la figure 4 représente le partage du temps -machine de l'ordinateur de la figure 1 ;
- la figure 5 est un schéma synoptique de fonctionnement d'un module d'application du programme principal de la figure 3.

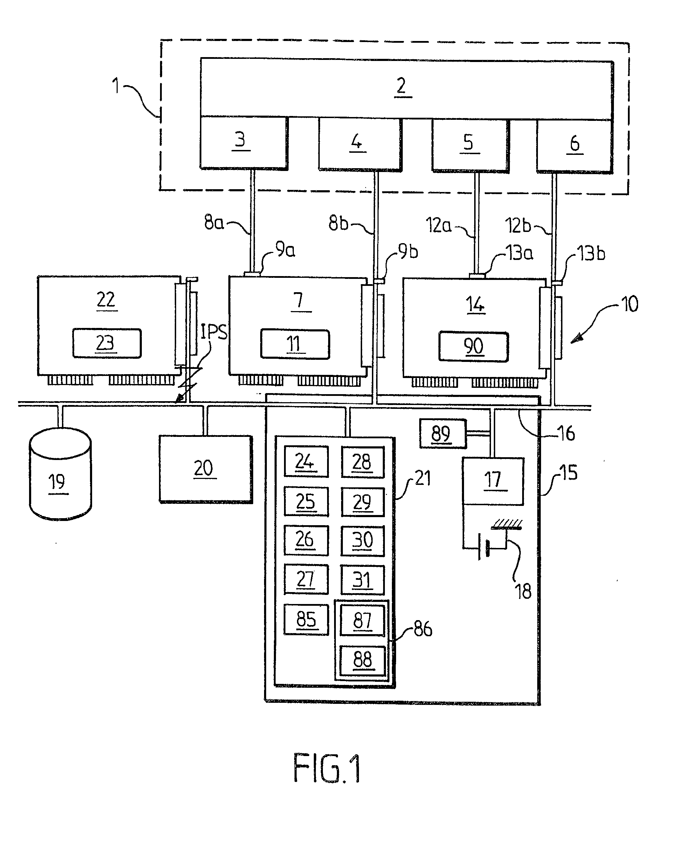

En référence à la figure 1, un banc d'essai 1 comprenant un moteur 2 est muni de capteurs 3 et 4 et d'actionneurs 5 et 6. Le capteur 3 est un capteur analogique de mesure d'une grandeur physique, telle qu'une température, une pression, un débit, une composition chimique, etc. Il produit un signal analogique de mesure MA dans une voie d'entrée analogique 9a d'une carte d'acquisition 7 d'un ordinateur, désigné globalement par le chiffre 10, par l'intermédiaire d'un moyen de transmission de signal analogique 8a pouvant être une liaison électrique, optique ou autre. Le capteur 3 comprend des moyens matériels de conditionnement du signal de mesure MA pour adapter ce signal aux propriétés de la voie d'entrée 9a, par exemple en normalisant l'amplitude du signal MA dans une plage de tension autorisée, par exemple entre 0 et 10V. La carte d'acquisition 7 comprend des moyens de conversion analogique-numérique 11 pour numériser le signal de mesure MA afin de permettre son traitement logiciel, qui sera expliqué plus bas.

Le capteur 4 est un capteur tout ou rien, par exemple un capteur de position d'une bascule à deux positions, qui produit un signal logique de mesure ML dans une voie d'entrée logique 9b de la carte d'acquisition 7 par l'intermédiaire d'un moyen de transmission de signal logique 8b.

Les actionneurs 5 et 6 sont des actionneurs intelligents pour commander, par exemple, l'accélérateur du moteur 2 et une vanne commandée. Ils sont reliés à des voies d'entrée -sortie 13a et 13b d'une carte de communication 14 de l'ordinateur 10 par des liaisons bidirectionnelles de transmission de signaux 12a et 12b pour transmettre des signaux de commande SC logiques ou analogiques depuis la carte de communication 14 vers les actionneurs 5 et 6 et transmettre des signaux d'état SE logiques ou analogiques depuis les actionneurs 5 et 6 vers la carte de communication 14. Par exemple, les communications entre la carte 14 et les actionneurs 5 et 6 peuvent être effectuées par une liaison série à la norme RS232 ou RS 485 ou toute autre liaison série ou parallèle normalisée. La carte de communication 14 comprend aussi des moyens de conversion numérique -analogique 90 pour envoyer des signaux de commande SC analogiques aux actionneurs 5 et 6.

Le banc d'essai peut aussi comprendre des capteurs intelligents, auquel cas ceux-ci sont aussi reliés à des voies d'entrée-sortie de la carte de communication, pour échanger des signaux de manière bidirectionnelle avec celle-ci de la même manière que les actionneurs intelligents 5 et 6.

Les cartes 7 et 14 sont respectivement reliées à un bus principal 16 d'une carte mère 15 de l'ordinateur 10 et servent de moyens d'interfaçage entre l'ordinateur 10 et, respectivement, les capteurs 3 et 4 et les actionneurs 5 et 6 du banc d'essai.

De manière connue, la carte mère 15 comporte, entre autres, le bus principal 16, un processeur 17, une horloge interne 18, au moins un contrôleur d'interruption 89 et une mémoire centrale 21, laquelle comprend des unités de mémoire morte RO M et de mémoire vive RAM (non représentées). Par le bus principal 16, la carte mère 15 est reliée à un disque dur 19, et à des moyens d'interfaçage homme - machine 20, par exemple un écran, un clavier et une souris. D'autres périphériques peuvent encore être reliés à l'ordinateur 10.

De manière également connue, l'ordinateur 10 est muni d'un système d'exploitation multitâche 86 comportant une couche noyau 87 et une couche applicative 88. Dans le mode de réalisation préféré, l'ordinateur 10 est un micro -ordinateur compatible PC et le système d'exploitation 86 est de la famille des systèmes Windows®, produits par Microsoft®.

L'ordinateur 10 est aussi muni d'une carte génératrice 22 pour générer sur le bus 16 une interruption prioritaire spécifique IPS, c'est-à-dire des signaux électriques particuliers, destinée à provoquer l'exécution d'une séquence d'instructions en temps réel, comme il sera expliqué plus bas. L'interruption prioritaire spécifique IPS est générée périodiquement à une fréquence FI, par exemple ég ale à 100 Hz, au moyen d'une seconde horloge 23 intégrée à la carte génératrice 22. Cependant, on peut se passer de la carte génératrice 22 en utilisant l'interruption générée périodiquement par l'horloge 18 de la carte mère 15 en tant qu'interruption prioritaire IPS.

Pour réaliser un essai, le banc d'essai 1 est contrôlé et commandé au moyen d'un programme de contrôle et de commande qui se compose d'un programme principal 24 et de programmes pilotes 85, 25 et 26 pour piloter respectivement la carte générat rice 22, la carte d'acquisition 7 et la carte de communication 14. Ce programme est mémorisé dans la mémoire centrale 21 pour être exécuté par l'ordinateur 10. De manière connue, l'ordinateur 10 est muni d'autant de programmes pilotes qu'il a de périphériques différents.

Avant de commencer un essai, l'opérateur doit définir et mémoriser dans la mémoire centrale 21 des données d'entrée destinées à être utilisées par les programmes 24, 25 et 26 au cours de leur exécution. Ces données d'entrée comportent notamment une procédure d'essai 27 qui définit le déroulement de l'essai sous la forme d'une suite chronologique d'instructions de commande devant être exécutées à des instants prédéterminés à partir du lancement de l'essai.

Par exemple, cette procédure d'essai définit une premier régime de fonctionnement du moteur, devant être tenu durant les dix premières minutes de l'essai, puis un deuxième régime plus élevé, devant être tenu pendant la demi-heure suivante, et ainsi de suite.

Les données d'entrée comportent aussi des procédures de sécurité 28 qui définissent des suites chronologiques d'instructions de commande devant être exécutées à des instants prédéterminés à partir de la validation de critères logiques prédéterminés de déclenchement. Ces critères de déclenchement de sécurité sont destinés à détecter l'entrée du banc d'essai dans un état de fonctionnement anormal et présentant un risque. Les procédures de sécurité sont destinées, le cas échéant, à se substituer à la procédure d'essai prévue ou à s'intercaler entre des instructions de la procédure d'essai pour ramener le banc d'essai dans un état de fonctionnement normal, avant de poursuivre, de redémarrer ou d'abandonner l'essai en cours.

Les données d'entrée comportent aussi des paramètres de fonctionnement 29 du programme principal 24, comme la fréquence FI ou son inverse, la période PI séparant deux occurrences successives de l'interruption IPS.

Les données d'entrée comportent aussi des paramètres de configuration 30 du programme principal 24 et des programmes pilotes 25 et 26, afin de définir le nombre et le type des voies d'entrée et de sortie utilisées lors de l'essai et le programme pilote responsable de l'interface entre le programme principal 24 et chaque voie.

Les données d'entrée comportent enfin des paramètres de représentation 31, afin de définir la nature et le format de représentation des informations destinées à être fournies par le programme principal 24 à destination de l'opérateur ou d'un utilisateur pendant et à l'issue de l'essai.

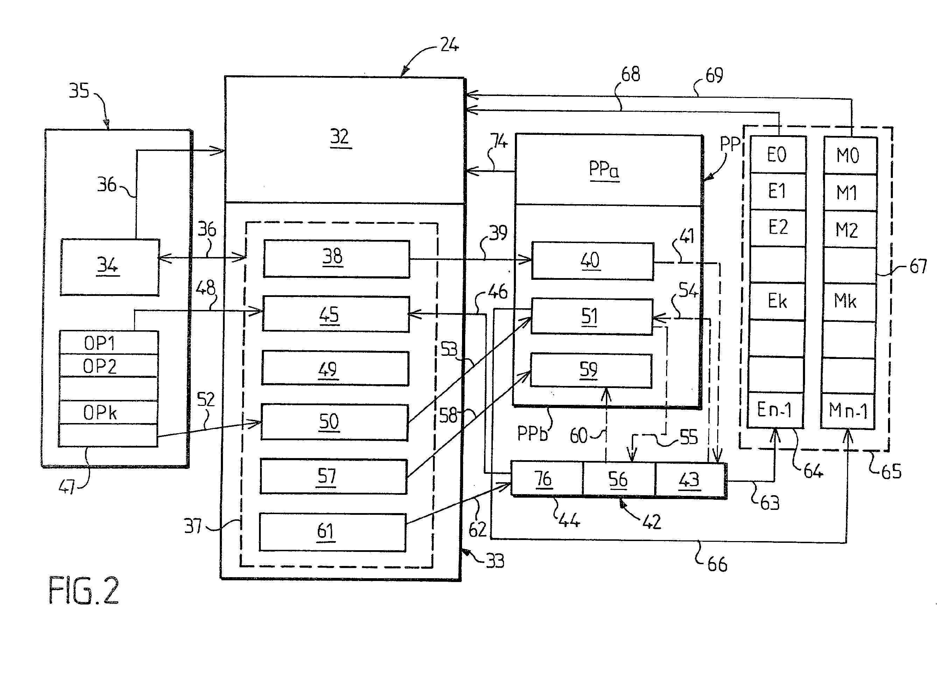

Le déroulement d'un essai va être maintenant expliqué en référence aux figures 2 à 5.

Sur la figure 2, un seul programme pilote PP a été représenté par souci de lisibilité. Le programme pilote PP est destiné à piloter un périphérique possédant des voies d'entrée et de sortie. Le programme pilote 26 fonctionne comme le programme pilote PP. Le programme pilote 25, destiné à piloter la carte d'acquisition 7 qui ne possède que des voies d'entrées, fonctionne comme le programme pilote PP sauf pour ce qui concerne les voies de sortie. De même, l'invention concerne aussi un programme pilote (non représenté) destiné à piloter un périphérique ne possédant que des voies de sortie. Ce dernier fonctionne comme le programme pilote PP sauf pour ce qui concerne les voies d'entrée.

Le programme principal 24 se compose d'un module d'application 32 qui fait appel aux primitives de la couche applicative du système d'exploitation, et d'un module de temps réel 33 qui fait appel aux primitives de la couche noyau à l'exclusion des primitives de la couche applicative. Les deux modules 32 et 33 invoquent des variables communes 34 qui sont mémorisées dans un bloc 35 de mémoire partagée entre le module 32 et le module 33 pour en permettre l'écriture et la lecture (flèches 36) par chacun d'eux. La procédure d'essai 27 est compilée sous la forme d'une série d'opérations élémentaires OP₁, OP₂, OPₖ, etc. formant un programme d'opération 47 également mémorisé dans le bloc 35 de mémoire partagée.

A chaque génération d'une interruption IPS par la carte génératrice 22 sur le bus 16, l'interruption IPS est reçue et interprétée par le contrôleur d'interruption 89 selon une méthode connue, à l'aide d'une table d'interruption (non représentée) qui fait correspondre à l'interruption IPS une adresse menant directement ou indirectement au point d'entrée d'une séquence d'instructions 37. Le contrôleur d'interruption 89 adresse de façon appropriée un signal au processeur 17 pour le dérouter immédiatement vers cette adresse. La séquence d'instructions 37 est alors immédiatement exécutée par le processeur 17. Dans le mode de réalisation préféré, la table d'interruption étant incluse dans le système d'exploitation Windows®, le programme pilote 85 de la carte génératrice 22 fait inclure les moyens nécessaires à l'interprétation de l'interruption IPS dans la table d'interruption initiale par le système d'exploitation. Cette modification de la table d'interruption a lieu au moment de l'initialisation du programme principal 24.

Le choix du numéro de l'interruption qui est utilisée comme interruption prioritaire IPS peut être effectué automatiquement par la couche BIOS du système d'exploitation, en fonction des interruptions disponibles, lesquelles dépendent des périphériques installés. Idéalement, il s'agit de l'interruption de priorité maximale, de sorte que l'exécution de la séquence d'instructions 37 ne puisse être masquée ou interrompue par d'autres tâches effectuées par l'ordinateur 10. Dans d'autres cas, le niveau de priorité de l'interruption prioritaire IPS n'est pas le plus élevé, mais il est suffisant pour que l'exécution de la séquence d'instructions 37 ne soit pas interruptible par les processus de la couche applicative, de sorte que les délais d'exécution restent négligeables. La séquence d'instructions 37 comporte les étapes successives suivantes :
- étape 38 : acquérir la valeur courante de chaque signal de mesure ML, MA ou d'état SE présent sur toutes les voies d'entrée 9a, 9b, 13a, 13b prédéfinies. Toutes les communications entre le programme principal 24 et les périphériques 7, 14 comportant les voies d'entrées 9a, 9b, 13a, 13b sont respectivement gérées par le programme pilote 25, 26 du périphérique correspondant. Ainsi, l'étape 38 comporte des appels 39 en temps réel vers des fonctions d'acquisition 40 de tous les programmes pilotes, dont un seul PP est représenté à la figure 2. Chaque fonction d'acquisition 40 appelée réalise alors une acquisition de la valeur courante des signaux interfacés par le périphérique correspondant et une écriture 41 de chaque valeur courante acquise dans un bloc 43, dit bloc des entrées, d'une zone de mémoire tampon 42, dite tampon courant. L'instant d'acquisition desdites valeurs courantes est également mémorisé dans un bloc 44, dit bloc des variables, sous la forme d'un compteur d'occurrence 76 de l'interruption IPS qui est incrémenté à chaque nouvelle occurrence de l'interruption IPS.
- étape 45 : évaluer les conditions logiques de déclenchement de sécurité. Pour cela, il se produit la lecture 46 des valeurs courantes mémorisées dans le tampon courant 42. Ces valeurs sont utilisées dans les calculs nécessaires à l'évaluation des conditions de déclenchement de sécurité. Lorsqu'une condition de déclenchement de sécurité est vérifiée, le curseur d'opération courante du programme d'opération 47 est modifié pour basculer vers la procédure de sécurité correspondante.
- étape 49 : calculer, en fonction des instructions de commande dont l'exécution est prévue à l'instant d'occurrence de l'interruption IPS, et en fonction des valeurs courantes mémorisées des signaux présents sur les voies d'entrée et de sortie, des valeurs de consigne qui correspondent aux signaux de commande devant être appliqués sur des voies de sorties pour commander les actionneurs de manière conforme à la procédure d'ess ai préétablie. Ces calculs peuvent comporter des opérations mathématiques codées en virgule flottante. Les valeurs courantes en fonction desquelles sont calculées les valeurs de consigne sont celles qui sont mémorisées dans le tampon courant 42, elle comprennent les valeurs acquises à l'étape 38, et les autre valeurs courantes qui n'ont pas été forcément actualisées à l'étape 38, comme des valeurs mémorisées dans un bloc de sorties 56 du tampon courant 42.
- étape 50 : effectuer la lecture 52 et l'exécution de celles des opérations suivantes du programme d'essai 47 dont l'exécution est prévue à l'instant d'occurrence de l'interruption IPS. L'étape 50 aboutit à la génération de valeurs de sortie correspondant audites opérations et dépendant des valeurs de consigne calculées. Pour cela, l'étape 50 comporte des appels 53 à des fonctions de cycle 51 des programmes pilotes, qui peuvent produire la lecture 54 des valeurs courantes du bloc d'entrées 43 et/ou l'écriture 55 des valeurs de sortie dans le bloc de sorties 56 du tampon courant 42 et/ou l'écriture 66 d'un message Mₙ₋₁ d'information et/ou d'instruction à destination du module d'application 32 dans une deuxième file d'attente 67 de la mémoire tampon 65. Les messages M₀, M₁, M₂, ... correspondant à chaque interruption IPS successive sont mémorisés par ordre chronologique dans la deuxième file d'attente 67.
- étape 57 : rendre égales aux valeurs de sortie, mémorisées dans le bloc de sortie 56, les valeurs courantes des signaux de commande appliqués sur les voies de sorties correspondantes. Pour cela, l'étape 57 comporte un appel 58 à une fonction de sortie 59 des programmes pilotes gérant les voies de sortie à actualiser, c'est -à-dire, dans le cas du dispositif de la figure 1, le pilote 26 du périphérique 14 comportant les voies de sortie 13a, 13b afin de transmettre des commandes d'actions aux actionneurs 5 et 6. Chaque fonction de sortie 59 effectue une lecture 60 des valeurs de sortie dans le bloc de sortie 56 et commande le périphérique correspondant pour mettre chaque signal de commande à la valeur de sortie correspondante.
- étape 61 : communiquer les nouvelles valeurs actualisées des signaux de mesure et de commande à destination du module d'application 32. Pour cela, les données du bloc des entrées 43, du bloc des variables 44 et du bloc des sorties 56 sont lues 62 et copiées 63 dans une première file d'attente 64 d'une mémoire tampon 65, pour former un enregistrement brut Eₙ₋₁ de l'état courant du banc d'essai 1. Ces données comportent l'instant d'occurrence de l'interruption IPS, qui est très précisément l'instant d'acquisition des valeurs courantes des signaux de mesure et d'envoi des valeurs courantes des signaux de commande. Les enregistrements bruts E₀, E₁, E₂, ... correspondant à chaque occurrence de l'interruption IPS sont mémorisés par ordre chronologique dans la file d'attente 64.

L'étape 61 clôture la séquence d'instructions 37, laquelle est exécutée à nouveau à l'occurrence suivante de l'interruption IPS. N'étant interruptible que par des interruptions de très haut niveau de priorité, la séquence 37 mobilise la quasi -totalité du temps-machine du processeur 17 lors de son exécution. Entre deux exécutions de la séquence d'instructions 37, le processeur 17 est disponible pour exécuter le module d'application 32 du programme principal 24, ainsi que tout autre programme simultanément actif sur l'ordinateur 10. La première tâche du module d'application 32 est d'effectuer la lecture 68 des enregistrements bruts E₀, E₁, ... , Eₖ et la lecture 69 des messages M₀, M₁, ... , Mₖ des files d'attentes, en ordre chronologique, pour poursuivre un traitement expliqué plus bas. Aux étapes 68 et 69, les enregistrements et messages lus sont dépilés, c'est-à-dire qu'ils sont supprimés des files d'attente 64 et 67. Ainsi, les files d'attente 64 et 67 se vident, par le haut de la figure 2, lors de l'exécution des étapes 68 et 69 et se remplissent, par le bas de la figure 2, lors de l'exécution des étapes 63 et 66.

Les variables communes 34 aux deux modules 32 et 33 comportent des indicateurs d'état du module temps réel 33 par lesquels le module d'application 32 connaît en permanence l'activité du module temps réel 33.

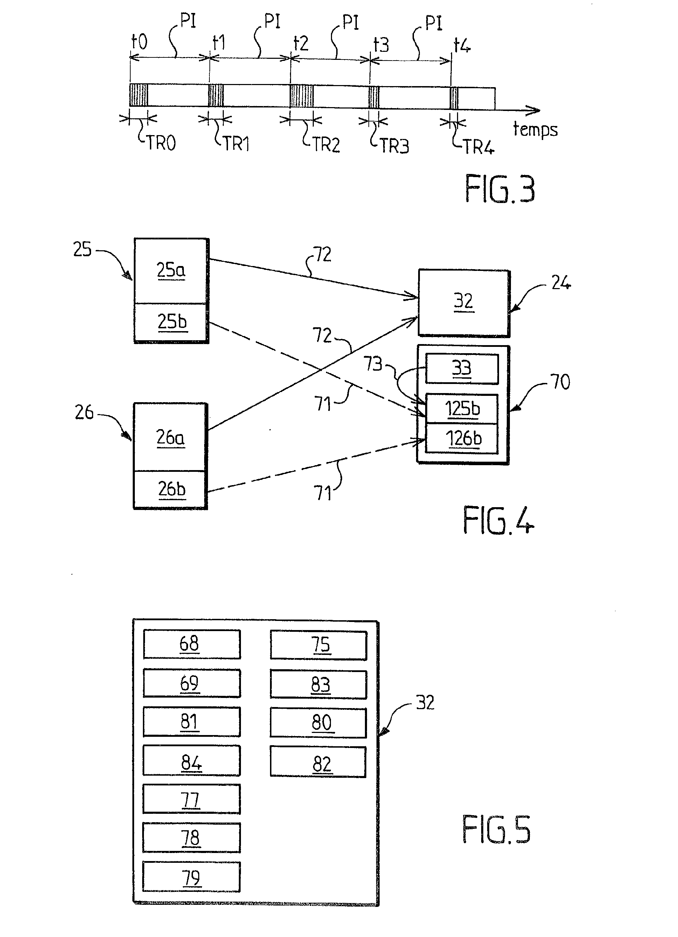

A la figure 3, on a représenté le partage du temps -machine du processeur 17 entre des exécutions successives de la séquence d'instructions 37. Ces exécutions ont lieu à des instants t₀ à t₄ séparées à chaque fois d'une période PI. Le temps d'exécution TR₀, TR₁, ... , TR₄ de la séquence 37 varie d'une occurrence à l'autre en fonction des instructions de la procédure d'essai, lesquelles conditionnement le nombre d'opérations élémentaires à exécuter, de calculs de consignes à effectuer, de valeurs courantes à lire ou à écrire, etc. Du fait de l'irrégularité du partage du temps-machine entre le module de temps réel 33 et le module d'application 32, la longueur des files d'attente 64 et 67 est variable. La taille de la zone mémoire maximale allouée aux files d'attente 64 et 67 est définie comme paramètre de fonctionnement du programme 24.

Comme il a été expliqué, chaque programme pilote PP d'un périphérique présentant des voies d'entrées et/ou de sorties utilisées pendant l'essai comporte des fonctions d'acquisition 40, de cycle 51 et de sortie 59 devant être appelées et exécutées en temps réel au sein de la séquence d'instructions 37. Comme visible aux figures 2 et 4, chaque programme pilote PP, 25, 26 se compose d'une partie d'application PPa, 25a, 26a qui fait appel aux primitives de la couche applicative du système d'exploitation et une partie de temps réel respective PPb, 25b, 26b qui ne fait appel ni aux primitives de la couche applicative, ni aux primitives de la couche noyau du système d'exploitation. La partie de temps réel des programmes pilote fait appel à des fonctions du processeur indépendantes de la couche applic ative et de la couche noyau du système d'exploitation.

Pour faciliter le développement, le débogage et l'installation des programmes pilotes, chacun d'eux est conçu sous la forme d'une bibliothèque de routines comportant aussi bien sa partie de temps réel que sa partie d'application. La partie de temps réel de chaque programme pilote n'invoque pas les données déclarées statiquement dans la bibliothèque correspondante.

Comme visible à la figure 4, avant toute exécution d'une routine ou fonction de la partie de temps réel 25b ou 26b du programme pilote 25 ou 26, cette fonction est copiée 71 dans un bloc mémoire 70 de manière à être adressable du module de temps réel 33. La copie 71 est une manière particulière au mode de réalisation préféré d'effectuer l'édition des liens entre les parties de temps réel 25b, 26b des programmes pilotes et le module de temps réel 33 du programme principal 24. Au sein de la séquence d'instructions 37, tout appel en temps réel de cette routine ou fonction de programme pilote par le module de temps réel 33 est en fait un appel 73 vers la copie respective 125b ou 126b de cette routine ou fonction dans le bloc de mémoire 70. Ainsi, les parties temps réel des programmes pilotes sont configurées au moment de leur exécution respective sensiblement comme si elles faisaient partie du programme principal 24 au moment de sa compilation. Le bloc de mémoire partagée 70 est dimensionné et alloué en début d'exécution par le programme principal 24 après que celui -ci a reçu de chaque programme pilote PP concerné une donnée 74 définissant l'espace mémoire nécessaire pour sa partie de temps réel PPb respective, comme visible à la figure 2.

La figure 5 représente les différentes tâches effectuées par le module d'application 32 du programme principal 24. Toutes les tâches effectuées par le module 32 le sont en temps différé, sous le contrôle des fonctions d'ordonnancement du système d'exploitation. A titre indicatif, le délai existant entre l'acquisition d'une mesure par le module de temps réel 33 et le traitement ultérieur de cette mesure par le module d'application 32 est en général inférieur à une seconde, mais dépend de la charge de travail du processeur 17.

Le module d'application 32 termine le traitement des données transmises via les files d'attentes 64 et 67 afin de fournir une représentation appliquée des états successifs du banc d'essai 1 au cours de l'essai et de la mettre à disposition de l'opérateur ou utilisateur. Pour cela, la tâche de dépilage des enregistrements bruts E₀, E₁, ... se poursuit jusqu'à un vidage complet de la file 64 et est suivie d'une étape 75 de mise en forme des valeurs courantes qu'ils contiennent, pour exprimer ces valeurs dans un format pertinent pour l'utilisateur et différent du format utilisé dans les enregistrements bruts. Cette mise en forme comporte la conversion des valeurs de mesure dans les unités correspondantes prédéfinies dans les paramètres de représentation 31, et la conversion du compteur d'occurrence 76 de l'interruption IPS en une valeur de temps pour dater les mesures correspondantes.

La tâche 77 consiste à exécuter les instructions comprises dans les messages M₀, M₁, ... lus à l'étape 69, par exemple d'afficher à l'écran un avertissement.

La tâche 78 correspond à une étape de calcul, à partir des données des enregistrements bruts, de paramètres d'état du banc d'essai 1 qui ne sont pas directement acquis par les capteurs.

La tâche 79 consiste en l'évaluation d'autres critères de déclenchement de sécurité dépendant des valeurs courantes lues, pour commander l'exécution d'une procédure de sécurité correspondante lorsqu'un critère de déclenchement est validé. Ces autres critères sont différents de ceux évalués au sein de l'étape 45. Dans ce cas, le module d'application 32 communique les instructions nécessaires au module de temps réel 33 par l'intermédiaire du bloc 35 de mémoire partagée.

La tâche 80 consiste en la surveillance des signaux de mesure ML, MA ou d'état SE ou de commande SC par rapport à des critères de surveillance prédéfinis par l'opérateur. Cette surveillance comporte la comparaison d'un signal avec un autre signal ou avec une constante prédéfinie. Lorsqu'un critère de surveillance est validé, des actions conditionnelles prédéfinies, comme l'écriture d'un message d'avertissement, sont exécutées.

La tâche 81 consiste en l'affichage à l'écran, au fil de la progression de l'essai, des états successifs du banc d'essai dans la représentation appliquée, par exemple graphique, choisie par l'opérateur dans les paramètres de représentation 31 et modifiable en cours d'essai par l'intermédiaire des moyens d'interface 20.

La tâche 82 consiste en l'exécution de services demandés par les programmes pilotes 25 et 26 par des appels 72 vers le module d'application 32, comme visible à la figure 4. Lors de l'initialisation du programme de contrôle et de commande, ces services servent notamment à établir le branchement fonctionnel des programmes pilotes 25 et 26 sur le programme principal 24 et l'identification par ce dernier des voies d'entrée et de sortie.

La tâche 83 consiste en l'exécution des instructions données de manière interactive par l'utilisateur en cours d'essai, par les moyens d'interface 20. Par exemple, ces instructions permettent d'interrompre le déroulement de l'essai, de modifier des instructions de la procédure d'essai, de modifier le format de la représentation appliquée, de demander l'acquisition de mesures supplémentaires par rapport à celles prévues dans la procédure d'essai, d'éditer ou de modifier les fichiers de résultats.

La tâche 84 consiste en le stockage sur le disque dur 19 de fichiers de résultats.

Bien que l'invention ait été décrite en liaison avec un mode de réalisation particulier, il est bien évident qu'elle n'y est nullement limitée et qu'elle comprend tous les équivalents techniques de s moyens décrits ainsi que leurs combinaisons si celles -ci entrent dans le cadre de l'invention.

Ainsi, l'invention n'est pas limitée à un nombre ou un type déterminé de capteurs, d'actionneurs et de moyens d'interface. Au contraire, on peut par exemple prévoir plusieurs cartes d'acquisition et/ou de communication fournissant plusieurs centaines de voies d'entrée et de sortie.

Il est bien entendu que la figure 1 est une représentation schématique qui ne limite pas l'ordinateur 10 à une architecture informatique particulière. Au contraire, l'invention englobe l'utilisation de toute architecture connue de l'homme du métier pour agencer les composantes d'un ordinateur nécessaires à la mise en oeuvre de l'invention.

La mise en oeuvre du programme de contrôle et de commande selon l'invention ayant été décrite en relation avec un banc d'essai, il est néanmoins évident que le programme selon l'invention peut être utilisé en combinaison avec tout système physique comportant au moins un capteur ou actionneur à contrôler et/ou commander en temps réel.

## Revendications

1. Programme pilote informatique pour périphérique d'ordinateur, ledit programme pilote (25, 26, PP) comportant des codes d'instructions aptes à être lus ou stockés sur un support d'enregistrement et aptes à être exécutés, par un ordinateur (10) muni d'un système d'exploitation (86) et de moyens de mémorisation (21), pour piloter au moins un périphérique (7, 14) destiné à être relié à un banc d'essai (1), ledit système d'exploitation comportant plusieurs couches fonctionnelles qui contiennent des primitives aptes à effectuer des tâches propres audit système d'exploitation, lesdites couches fonctionnelles comprenant une couche noyau (87) qui contient des fonctions d'ordonnancement et une couche applicative (88) dont les primitives dépendent des primitives de la couche noyau, lesdites fonctions d'ordonnancement étant aptes à retarder l'exécution des primitives de la couche applicative par ledit ordinateur (10), ledit programme pilote comportant au moins une fonction temps réel (40, 51, 59, 125b, 126b) apte à être appelée par un module de temps réel (33) d'un programme principal (24) et à s'exécuter en temps réel, immédiatement lors dudit appel (39, 53, 58, 73), **caractérisé par le fait que** ladite fonction temps réel n'invoque ni les primitives spécifiques de la couche noyau, ni les primitives spécifiques de la couche applicative, pour être apte à être copiée de manière adressable dans un bloc de mémoire (70) dudit module de temps réel (33), avant d'être appelée par ce dernier ; l'exécution de ladite fonction temps réel comportant au moins une des étapes consistant à :
- acquérir (40) une valeur actuelle d'au moins un signal de mesure, sur au moins une voie d'entrée (9a, 9b) dudit périphérique ;
- rendre (59) une valeur actuelle d'au moins un signal de commande, appliqué sur au moins une voie de sortie (13a, 13b) dudit périphérique, égale à une valeur de sortie prédéterminée (56),
- exécuter une fonction de cycle (51).

2. Programme pilote selon la revendication 1, **caractérisé par le fait que** l'exécution de ladite fonction temps réel comporte ensuite l'étape (41, 55) consistant à mémoriser chacune desdites valeurs actuelles dans lesdits moyens de mémorisation (42, 43, 56).

3. Programme pilote selon la revendication 1 ou 2, **caractérisé par le fait que** l'exécution de ladite fonction temps réel comporte l'étape (60) consistant à lire ladite valeur prédéterminée dans lesdits moyens de mémorisation (56).

4. Programme pilote selon l'une des revendications 1 à 3, **caractérisé par le fait qu'**il comporte une partie d'application (25a, 26a, PPa) apte à appeler un module d'application (32) dudit programme principal, ladite partie d'application et ledit module d'application invoquant des primitives de la couche applicative (88) dudit système d'exploitation.

5. Programme pilote selon l'une des revendications 1 à 4, **caractérisé par le fait qu'**il est apte à mettre en forme lesdits signaux de mesure et/ou de commande en fonction de paramètres de configuration (30) de ladite ou desdites voie(s) d'entrée et/ou de sortie, lesdits paramètres de configuration étant destinés à être définis par un opérateur et mémorisés dans lesdits moyens de mémorisation.

6. Programme pilote selon l'une des revendications 1 à 5, **caractérisé par le fait qu'**il se présente sous la forme d'une bibliothèque de routines appartenant à la couche applicative (88).

7. Programme pilote selon la revendication 6, **caractérisé par le fait que** ladite fonction temps réel n'invoque pas de donnée déclarée statiquement dans ladite bibliothèque.

8. Programme pilote selon l'une des revendications 1 à 7, **caractérisé par le fait qu'**il est destiné à piloter une interface d'acquisition (7) reliée à au moins un capteur (3, 4) dudit banc d'essai.

9. Programme pilote selon l'une des revendications 1 à 8, **caractérisé par le fait qu'**il est destiné à piloter une interface de contrôle (14) reliée à au moins un actionneur (5, 6) dudit banc d'essai.

10. Programme informatique selon l'une des revendications 1 à 9, **caractérisé par le fait que** ledit système d'exploitation est une version sans extension temps réel d'un système d'exploitation de type Windows® produit par Microsoft®.
